# EUROPEAN PATENT APPLICATION

(11) **EP 4 212 869 A1**
(43) Date of publication of application: **19.07.2023**
(21) Application number: 21865895.3
(22) Date of filing: 31.08.2021
(51) Int. Cl.: G01N 29/02, G01N 29/32, B01D 19/00

(54) **ULTRASONIC SENSOR, AND PREPARATION METHOD AND APPLICATION THEREOF**

(30) Priority: 11.09.2020 CN 202010953794
(71) Applicant: KUS Technology Corporation, Dongguan, Guangdong 523000 (CN)
(72) Inventor: KU, Yi-Hsin, Dongguan, Guangdong 523000 (CN); MEI, Hongcheng, Dongguan, Guangdong 523000 (CN)
(74) Representative: Biggi, Cristina
(86) International application number: PCT/CN2021/115765
(87) International publication number: WO 2022/052840

(57) **Abstract**

An ultrasonic sensor and a preparation method and application thereof. A transmitting/receiving surface and a reflecting surface of the ultrasonic sensor are both coated with a water-soluble resin layer. Since the transmitting/receiving surface and the reflecting surface of the ultrasonic sensor are both coated with the water-soluble resin layer, although there are still bubbles attached to the transmitting/receiving surface and the reflecting surface coated with water-soluble resin, as the water-soluble resin is dissolved in a urea solution, the bubbles lose their attachment points, rise to the surface of the liquid due to the light weight thereof, and then burst, such that the bubbles are rapidly detached from the transmitting/receiving surface and the reflecting surface of the ultrasonic sensor so as to eliminate the influence of the bubbles on the measurement of the sensor, thereby improving the measurement precision.

## Description

### Cross-Reference to Related Application

The present disclosure claims priority to Chinese Patent Application No. 202010953794.9, filed to the China National Intellectual Property Administration on September, 11, 2020 and entitled "Ultrasonic Sensor and Preparation Method and Application Thereof", the disclosure of which is hereby incorporated by reference in its entirety.

### Technical Field

The present disclosure relates to the technical field of sensors, and in particular to an ultrasonic sensor and preparation method and application thereof.

### Background

The quality of a urea solution is often susceptible to bubbles when detected by using an ultrasonic detector. When the urea solution is filled into a urea tank for the first time, a large amount of bubbles will be generated in the urea solution. Since a sensor is in a dry state before the urea solution is filled, the bubbles are easily attached to a transmitting/receiving surface and a reflecting surface of the sensor, and will not be detached and dissipated for a long time, which affects the measurement precision of the ultrasonic detector, so that the detector may not accurately measure the quality of the urea solution.

CN108535408A discloses a urea sensor protection assembly, configured to protect at least one fluid sensor of a urea sensor system against bubbles and/or particles. In order to provide a urea sensor protection assembly which effectively protects the fluid sensor, is easy to manufacture and to assemble, and reduces the stress on the fluid sensor, the assembly of the present disclosure includes an inner cage and an outer cage, the inner cage being configured to support the at least one fluid sensor, the outer cage including at least one filter member configured to block bubbles and/or allow fluid to pass, and the inner cage being, in an assembled state, at least partially arranged in an inner volume of the outer cage. The present disclosure aims to solve the problem of bubbles, but the separate outer cage makes the structure of the sensor more complicated, the process more difficult and the cost higher.

CN211116212U discloses a tail gas after-treatment system and a urea sensor thereof. The urea sensor is provided with a liquid suction pipeline configured to be connected with a urea pump. The liquid suction pipeline is composed of an outer connector pipe and an inner urea pipe, the circulation sections of any two positions located in the full-length range of the liquid suction pipeline are the same, the end, close to the outer connector pipe, of the inner urea pipe is provided with an arc-shaped turning section, and the central angle of the turning section is 90 degrees. According to the urea sensor provided by the utility model, the liquid suction pipeline with more reasonable structural design is adopted, so that the risk that bubbles are generated in the flowing process of urea may be effectively reduced, and therefore, pressure fluctuation caused by excessive bubbles sucked by a urea pump is avoided. Also, the sensor has a complicated structure and higher cost.

In order to solve this problem, it is urgent to study how to quickly detach the bubbles from the solid wall surface with simple operation and low cost in the field.

### Summary

In view of the deficiencies of the related art, one of the objects of the present disclosure is to provide an ultrasonic sensor, in particular to an ultrasonic sensor for detecting the quality of a urea solution. The ultrasonic sensor may automatically detach bubbles from a transmitting/receiving surface and a reflecting surface, which ensures the detection precision of the sensor, and does not require a complicated preparation process and is low in cost.

In order to achieve this object, the present disclosure adopts the following technical solution.

The present disclosure provides an ultrasonic sensor, a transmitting/receiving surface and a reflecting surface of the ultrasonic sensor are both coated with a water-soluble resin layer.

In the present disclosure, the specific types of the water-soluble resin layers on the transmitting/receiving surface and the reflecting surface may be the same or different.

Due to the structure of the ultrasonic sensor, the transmitting/receiving surface is a surface emitting ultrasonic waves, and after being transmitted to the reflecting surface, the ultrasonic waves are reflected back to the transmitting/receiving surface, and the transmitting/receiving surface has both transmitting and receiving functions, and is therefore referred to as the transmitting/receiving surface in the field.

In the present disclosure, since the transmitting/receiving surface and the reflecting surface of the ultrasonic sensor are both coated with the water-soluble resin layer, although there are still bubbles attached to the transmitting/receiving surface and the reflecting surface coated with water-soluble resin in the process of adding a urea solution, as the water-soluble resin is dissolved in the urea solution, the bubbles lose their attachment points, rise to the surface of the liquid due to the light weight thereof, and then burst. Thus, the bubbles are rapidly detached from the transmitting/receiving surface and the reflecting surface of the ultrasonic sensor so as to eliminate the influence of the bubbles on the measurement of the sensor, thereby improving the measurement precision.

In addition, the water-soluble resin layer has only trace metal elements, which meets the industry standard and does not affect the sending and reception of ultrasonic signals.

Preferably, the transmitting/receiving surface and the reflecting surface are both made of stainless steel.

Preferably, the water-soluble resin may include any one or a combination of at least two of aqueous acrylic resin, water-soluble polyvinyl alcohol resin, aqueous polyurethane resin, aqueous modified polybutadiene resin or polyethylene oxide resin, preferably aqueous acrylic resin and/or polyvinyl alcohol resin.

Preferably, dissolution time of each of the water-soluble resin layers in urea solution is 3-10 min, for example, 4 min, 5 min, 6 min, 7 min, 8 min, 9 min, etc., preferably 5-10 min.

In a preferred technical solution of the present disclosure, in order to ensure proper use of the ultrasonic sensor, the water-soluble resin needs to be rapidly and completely dissolved after the first filling of the urea solution is completed, preferably in 3-10min. Rapid dissolution after the first filling of the urea solution is completed is ensured, without affecting the detection of the urea solution by the sensor after the filling is completed. If the dissolution time is too long, the undissolved resin layer may affect the normal operation of the sensor. If the resin layer is completely dissolved before the first filling of the urea solution is completed, re-adsorption of the bubbles on the transmitting/receiving surface and reflecting surface may be caused.

Preferably, concentration of the urea solution is 32.5%.

Preferably, the thickness of the water-soluble resin layer is 10-50 µm, for example, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, etc.

In a preferred technical solution of the present disclosure, it is ensured that the water-soluble resin layer has a suitable dissolution time by setting thickness of each of the resin layers to 10-50 µm.

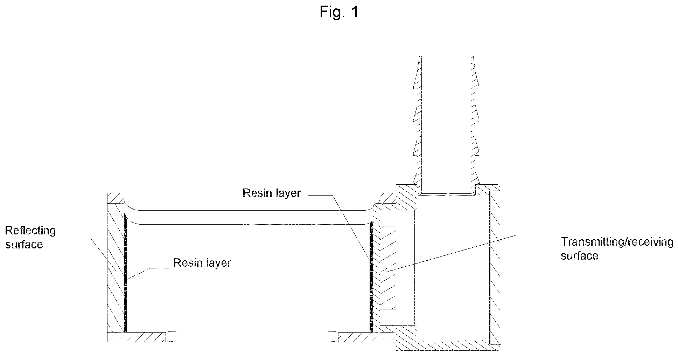

In a specific implementation mode of the present disclosure, the structure of the ultrasonic sensor is shown in Fig. 1.

The second object of the present disclosure is to provide a method for preparing the ultrasonic sensor as described in one of the objects. The method includes that: water-soluble resin is sprayed on a transmitting/receiving surface and a reflecting surface of an ultrasonic sensor, and dried to obtain an ultrasonic sensor that's the transmitting/receiving surface and the reflecting surface are both coated with a water-soluble resin layer.

Preferably, drying temperature is 20-40°C, for example, 21°C, 22°C, 23°C, 24°C, 25°C, 26°C, 27°C, 28°C, 29°C, 30°C, 31°C, 32°C, 33°C, 34°C, 35°C, 36°C, 37°C, 38°C, 39°C, etc.

Preferably, drying time is 10-45 min, for example, 11 min, 12 min, 13 min, 14 min, 15 min, 16 min, 17 min, 18 min, 19 min, 20 min, 21 min, 22 min, 23 min, 24 min, 25 min, 26 min, 27 min, 28 min, 29 min, 30min, 31 min, 32 min, 33 min, 34 min, 35 min, 36 min, 37 min, 38 min, 39 min, 40 min, 41 min, 42 min, 43 min, 44 min, etc.

The third object of the present disclosure is to provide an application of the ultrasonic sensor as described in one of the objects. The ultrasonic sensor is configured to detect a urea solution.

The fourth object of the present disclosure is to provide a using method of the ultrasonic sensor as described in one of the objects. The using method includes that: the ultrasonic sensor is placed in a urea tank, and a urea solution is filled to dissolve a water-soluble resin layer in the ultrasonic sensor.

Preferably, filling volume of the urea solution is 20-40% of the volume of the urea tank, for example, 21%, 22%, 23%, 24%, 25%, 26%, 27%, 28%, 29%, 30%, 31%, 32%, 33%, 34%, 35%, 36%, 37%, 38%, 39%, etc., preferably 30%.

Preferably, filling time of the urea solution is 1-5 min, for example, 1 min, 2 min, 3 min, 4 min, etc.

Preferably, dissolution time of the water-soluble resin layer is ≥filling time of the urea solution.

In a preferred technical solution of the present disclosure, in order to ensure proper use of the ultrasonic sensor, the water-soluble resin needs to be rapidly and completely dissolved after the first filling of the urea solution is completed, preferably in 3-10min. Rapid dissolution after the first filling of the urea solution is completed is ensured, without affecting the detection of the urea solution by the sensor after the filling is completed. If the dissolution time is too long, the undissolved resin layer may affect the normal operation of the sensor. If the resin layer is completely dissolved before the first filling of the urea solution is completed, re-adsorption of the bubbles on the transmitting/receiving surface and reflecting surface may be caused.

Preferably, dissolution time of the water-soluble resin layer is 3-10 min, preferably 5-10 min.

Compared to the related art, the present disclosure has the following beneficial effects.

In the present disclosure, since the transmitting/receiving surface and the reflecting surface of the ultrasonic sensor are both coated with the water-soluble resin layer, although there are still bubbles attached to the transmitting/receiving surface and the reflecting surface coated with the water-soluble resin, as the water-soluble resin is dissolved in the urea solution, the bubbles lose their attachment points, rise to the surface of the liquid due to the light weight thereof, and then burst. Thus, the bubbles are rapidly detached from the transmitting/receiving surface and the reflecting surface of the ultrasonic sensor so as to eliminate the influence of the bubbles on the measurement of the sensor, thereby improving the measurement precision.

In addition, the water-soluble resin layer has only trace metal elements, which meets the industry standard and does not affect the sending and reception of ultrasonic signals.

### Brief Description of the Drawings

Fig. 1 is a schematic diagram of an ultrasonic sensor provided in a specific implementation mode of the present disclosure.

### Detailed Description of the Embodiments

In order to facilitate an understanding of the present disclosure, the following embodiments are set forth. It should be understood by those skilled in the art that the embodiments are only used to help the understanding of the present disclosure and should not to be construed as limiting the present disclosure.

### Embodiment 1

The embodiment provides an ultrasonic sensor. A transmitting/receiving surface and a reflecting surface are both coated with an aqueous acrylic resin having a thickness of 1 µm (compositions: 55.5% of acrylic resin and 44.5% of water).

A specific preparation method is as follows: the aqueous acrylic resins are coated on the transmitting/receiving surface and the reflecting surface of the ultrasonic sensor, and dried at 10°C for 40 min to obtain the ultrasonic sensor whose transmitting/receiving surface and reflecting surface are both coated with a water-soluble resin layer.

### Embodiments 2-7

The only difference from Embodiment 1 is that the thickness of the aqueous acrylic resin is 5 µm (Embodiment 2), 10 µm (Embodiment 3), 30 µm (Embodiment 4), 50 µm (Embodiment 5), 60 µm (Embodiment 6), 70 µm (Embodiment 7), respectively.

### Embodiment 8

The difference from Embodiment 3 is that the aqueous acrylic resin on the transmitting/receiving surface and the reflecting surface is replaced with aqueous polyvinyl alcohol resin of the same thickness (compositions: 13.4% of polyvinyl alcohol and 86.6% of water).

### Embodiments 9-11

The only difference from Embodiment 8 is that the thickness of the aqueous polyvinyl alcohol resin is 20 µm (Embodiment 9), 30 µm (Embodiment 10), 50 µm (Embodiment 11), respectively.

### Comparative embodiment 1

The difference from Embodiment 1 is that the transmitting/receiving surface and the reflecting surface of the ultrasonic sensor are not coated with a water-soluble resin layer.

### Performance test

The ultrasonic sensor prepared in the above embodiments and comparative embodiments was placed in a urea tank, and a urea solution having a concentration of 32.5% was filled to 30% of the volume of the urea tank for 5 min.
(1) The dissolution time of the water-soluble resin layer was observed and recorded.
(2) The change of bubbles on the transmitting/receiving layer and the reflecting layer in the process of filling the urea solution was observed, and the bubbles at 0 min (the beginning of filling of the urea solution), 5 min (the end of filling of the urea solution) and 10 min (standing for 5 min after filling of the urea solution was completed) were recorded, a large number of bubbles being marked as ×, a small number of bubbles being marked as □, and no significant bubble being marked as o.

The above test results were shown in Table 1 below.

**Table 1**

| | Thickness of Resin Layer /µm | Dissolution Time of Resin Layer /min | Bubble at 0 min | Bubble at 5min | Bubble at 10min |
|---|---|---|---|---|---|
| Embodiment 1 | 1 | 0.5 | × | × | × |
| Embodiment 2 | 5 | 1 | × | × | × |
| Embodiment 3 | 10 | 3 | × | □ | ○ |
| Embodiment 4 | 30 | 6 | × | □ | ○ |
| Embodiment 5 | 50 | 10 | × | × | ○ |
| Embodiment 6 | 60 | 13 | × | × | □ |
| Embodiment 7 | 70 | 17 | × | × | × |
| Embodiment 8 | 10 | 4 | × | □ | ○ |
| Embodiment 9 | 20 | 5 | × | ○ | ○ |
| Embodiment 10 | 30 | 7 | × | □ | ○ |
| Embodiment 11 | 50 | 10 | × | × | ○ |
| Comparative example 1 | 0 | - | × | × | × |

It may be seen from Table 1 that the ultrasonic sensor provided in the present disclosure may effectively solve the problem of absorption of the bubbles on the transmitting/receiving surface and the reflecting surface, so that the bubbles are detached as the water-soluble resin dissolves, there are almost no bubbles or only a small amount of bubbles after the urea solution is filled, and there is no complicated process and the cost is low.

It may be seen from Comparative embodiments 1-7 that when the dissolution time of the water-soluble resin layer is in 3-10 min (Embodiments 3-5), it may not only effectively eliminate the bubbles on the transmitting/receiving surface and the reflecting surface, but also ensure that the sensor has a higher precision. Too short dissolution time (Embodiments 1-2) may result in re-adsorption of the bubbles on the transmitting/receiving surface and the reflecting surface, and too long dissolution time (Embodiments 6-7), incomplete dissolution of the water-soluble resin and still sticking of the bubbles, and may affect the precision of the sensor.

### (3) Metal ion content test

A metal ion content test was performed on the aqueous acrylic resin and the aqueous polyvinyl alcohol resin used in the above embodiments (reference standard: JIS K0119-2008). The results were shown in Table 2 below.

**Table 2**

| | Sequence number | Composition | CAS NO. | Content (%) |
|---|---|---|---|---|
| Aqueous acrylic resin | 1 | Sodium ion | 7440-23-5 | 0.0063 |
| | 2 | Potassium ion | 7440-09-7 | 0.0011 |
| | 3 | Calcium ion | 7789-78-8 | 0.0014 |
| Aqueous polyvinyl alcohol resin | 4 | Sodium ion | 7440-23-5 | 0.0081 |
| | 5 | Potassium ion | 7440-09-7 | 0.0009 |
| | 6 | Calcium ion | 7789-78-8 | 0.0018 |

It may be seen from Table 2 that the water-soluble resin layer of the present disclosure contains only trace metal elements, which meets the industry standard (GB29518-2013) and does not affect the sending and reception of ultrasonic signals.

The applicant states that a detailed method of the present disclosure is illustrated by means of the above embodiments in the present disclosure, but the present disclosure is not limited to the above detailed method, that is, it does not mean that the present disclosure must rely on the above detailed method for implementation. It should be apparent to those skilled in the art that any modifications to the present disclosure, equivalent substitutions to various raw materials of products of the present disclosure, addition of auxiliary components, selection of a specific way, etc. fall within the scope of the protection and invention of the present disclosure.

### Industrial Applicability

A solution provided by the embodiments of the present disclosure may be configured to coat a transmitting/receiving surface and a reflecting surface of an ultrasonic sensor with a water-soluble resin layer, although there are still bubbles attached to the transmitting/receiving surface and the reflecting surface coated with water-soluble resin in the process of adding a urea solution, as the water-soluble resin is dissolved in the urea solution, the bubbles lose their attachment points, rise to the surface of the liquid due to the light weight thereof, and then burst. Thus, the bubbles are rapidly detached from the transmitting/receiving surface and the reflecting surface of the ultrasonic sensor so as to eliminate the influence of the bubbles on the measurement of the sensor, thereby improving the measurement precision. In addition, the water-soluble resin layer has only trace metal elements, meets the industry standard and does not affect the sending and reception of ultrasonic signals.

## Claims

1. An ultrasonic sensor, wherein a transmitting/receiving surface and a reflecting surface of the ultrasonic sensor are both coated with a water-soluble resin layer.

2. The ultrasonic sensor as claimed in claim 1, wherein the water-soluble resin comprises any one or a combination of at least two of aqueous acrylic resin, water-soluble polyvinyl alcohol resin, aqueous polyurethane resin, aqueous modified polybutadiene resin or polyethylene oxide resin, preferably aqueous acrylic resin and/or polyvinyl alcohol resin.

3. The ultrasonic sensor as claimed in claim 1 or 2, wherein dissolution time of each of the water-soluble resin layers in urea solution is 3-10 min, preferably 5-10 min; and
preferably, concentration of the urea solution is 32.5%.

4. The ultrasonic sensor as claimed in any one of claims 1-3, wherein thickness of each of the water-soluble resin layers is 10-50 µm.

5. A method for preparing the ultrasonic sensor as claimed in any one of claims 1-4, comprising: spraying water-soluble resin on a transmitting/receiving surface and a reflecting surface of the ultrasonic sensor, and drying to obtain an ultrasonic sensor that's the transmitting/receiving surface and the reflecting surface are both coated with a water-soluble resin layer.

6. The method as claimed in claim 5, wherein drying temperature is 20-40°C.

7. The method as claimed in claim 5 or 6, wherein drying time is 10-45 min.

8. An application of the ultrasonic sensor as claimed in any one of claims 1-4, wherein the ultrasonic sensor is configured to detect a urea solution.

9. A method for using the ultrasonic sensor as claimed in any one of claims 1-4, comprising: placing the ultrasonic sensor in a urea tank, and filling a urea solution to dissolve a water-soluble resin layer in the ultrasonic sensor.

10. The method as claimed in claim 9, wherein filling volume of the urea solution is 20-40% of the volume of the urea tank, preferably 30%;
preferably, filling time of the urea solution is 1-5 min;
preferably, dissolution time of the water-soluble resin layer is ≥filling time of the urea solution; and
preferably, dissolution time of the water-soluble resin layer is 3-10 min, preferably 5-10 min.
